# EUROPEAN PATENT SPECIFICATION

(11) **EP 2 455 337 B1**
(45) Date of publication and mention of the grant of the patent: **07.01.2015**
(21) Application number: 10191994.2
(22) Date of filing: 22.11.2010
(51) Int. Cl.: C01B 31/02

(54) **Process for fabrication and surface modification of colloidal carbon spheres in supercritical media**
Verfahren zur Herstellung und Oberflächenmodifizierung von kollodialen Kohlenstoffkugeln in superkritischen Medien
Procédé permettant la fabrication et la modification de surface de sphères de carbone colloïdal dans un milieu supercritique

(43) Date of publication of application: 23.05.2012
(73) Proprietor: University of Limerick, Limerick (IE)
(72) Inventor: Ryan, Kevin, Oola, Co. Limerick (IE); Barrett, Christopher, Castletroy, Limerick (IE); Singh, Ajay, Castletroy, Limerick (IE)
(74) Representative: Purdylucey Intellectual Property

(56) References cited:
- JP-A- 2008 142 609
- US-A1- 2009 272 391
- CHRISTOPHER A BARRETT ET AL: "The evolution of pseudo-spherical silicon nanocrystals to tetrahedra, mediated by phosphonic acid surfactants", NANOTECHNOLOGY, IOP, BRISTOL, GB, vol. 20, no. 27, 8 July 2009 (2009-07-08), page 275605, XP020160669, ISSN: 0957-4484
- LOU Z ET AL: "Large-scale synthesis of carbon spheres by reduction of supercritical CO2 with metallic calcium", CHEMICAL PHYSICS LETTERS 20060415 ELSEVIER NL, vol. 421, no. 4-6, 15 April 2006 (2006-04-15), pages 584-588, XP5362559, DOI: DOI:10.1016/J.CPLETT.2006.01.119
- QIAN ET AL: "Low temperature synthesis of carbon nanospheres by reducing supercritical carbon dioxide with bimetallic lithium and potassium", CARBON, ELSEVIER, OXFORD, GB, vol. 44, no. 7, 1 June 2006 (2006-06-01), pages 1303-1307, XP005335604, ISSN: 0008-6223, DOI: DOI:10.1016/J.CARBON.2006.01.010
- WANG, QIANG ET AL: "Formation of carbon micro-sphere chains by defluorination of PTFE in a magnesium and supercritical carbon dioxide system", GREEN CHEMISTRY, [Online] vol. 7, 2005, pages 733-736, XP002634771, & GREEN CHEMISTRY , 7(10), 733-736 CODEN: GRCHFJ; ISSN: 1463-9262, 2005,

## Description

### Field of the Invention

The invention relates to the synthesis and assembly of carbon spheres. More particularly, the invention relates to the synthesis, assembly, and modification of colloidal carbon spheres in Supercritical fluids.

### Background to the Invention

Colloidal carbon spheres have been a continued research interest in view of the fact that their intrinsic properties can be finely tuned by changing parameters such as diameter, chemical composition, bulk structure, and crystallinity. As a result, the material science related to carbon materials has become an area of intense interest, motivated by its potential applications in carbon fixation, catalyst supports, adsorbents, gas storage, anode components and carbon fuel cells.

As a result of carbon's unique electrical and bio-inert properties, numerous methods of fabrication exist. To-date, the most commonly employed methods include, direct pyrolysis of polymer spheres, pyrolysis of polymersoaked/coated porous ceramic beads, pyrolysis of hydrocarbons and polymers, or infiltration of porous templates with carbon or a material which converts into carbon. In addition, the physical routes of high-voltage-arc electricity and laser ablation synthesis demonstrated little in the way of precision controlled growth. Colloidal carbon spheres with a high monodispersity can be assembled into colloidal photonic supercrystal arrays which have been found to exhibit unique optical characteristics. Modification of these carbon arrays with metal-metalloid nanomaterials such as silicon (Si), germanium (Ge) and tin (Sn) are of particular importance given the recent surge of interest in the development of higher-specific-energy lithium (Li) batteries. Magasinski *et al.* (A. Magasinski, P. Dixon, B. Hertzberg, A. Kvit, J. Ayala & G. Yushin; High-pefrmance lithium-ion anodes using a hierarchical bottom-up approach; Nature Materials (2010) 9, pp. 353-358) recently reported reversible capacities of over five times higher than that of current state-of-the-art anodes using silicon-carbon (Si-C) nanocomposites. The enhanced performance of metal-carbon composite anode arrays is thought to attribute high interfacial contact area with electrolyte, increased electronic conduction along the length of the carbon structure and superior electrical contact between each nanocrystal and the current collector.

Successful integration of carbon material with such applications hinges upon the large scale availability of high quality colloidal carbon spheres with controllable size and surface properties. Silica and polymer spheres are readily fabricated and commercially available with very high standards of shape and monodispersity, but little research has been targeted at the preparation of such carbon particles. Many synthetic methods, such as carbonization, high-voltage-arc electricity, laser ablation and hydrothermal carbonization, for example as published by Chen, C.; Sun, X.; Jiang, X.; Niu, D.; Yu, A.; Liu, Z.; Li, J., Nanoscale Res. Lett. 2009, 4, 971 and also Liu, Y.; Ren, Z.; Wei, Y.; Jiang, B.; Feng, S.; Zhang, L.; Zhang, W.; Fu, H., J. Mater. Chem. 2010, 20, 4802, have been reported for the preparation of amorphous, carbonaceous, porous or crystalline carbon materials with different sizes and chemical compositions. Carbon spheres with approximate uniform diameters were synthesized by chemical reduction of supercritical carbon dioxide with metallic calcium (Lou Z. et al., Chem. Phys. Lett., 2006, 421, 584-588). Non-spherical or barely spherical by-products are often generated during preparation. Sphere yields using these methods are found to deformed, relatively large (micro to macro range) and predominantly polydisperse in size. It is also worth noting that the more complex route of infilling of porous templates inherently requires extra costs and/or synthetic preparation steps. Hence, in terms of quality and simplicity of preparation, carbonaceous material has not yet reached the level of the more commonly fabricated spherical particles, such as the above-mentioned silica or polymer spheres.

Although a small number of reports exist for the synthesis of colloidal carbon spheres, the simultaneous achievement of sized controlled growth and particle assembly coupled with nanocrystal surface functionalisation has not been achieved.

There is therefore a need to provide colloidal carbon spheres, with sized controlled growth and particle assembly coupled with nanocrystal surface functionalisation by a suitable method or process to overcome the above-mentioned problems.

### Summary of the Invention

According to the present invention there is provided, as set out in the appended claims, a process for producing monodispersed carbon spheres comprising the steps of:
(a) mixing supercritical-carbon dioxide fluid with a low volatile solvent in an inert atmosphere;
(b) heating the mixture in (a) to a temperature to carbonize the solvent; and
(c) controllably varying pressure to the heated mixture in (b) to produce carbon spheres.

In one embodiment the pressure applied to the heated mixture is inversely proportional to the diameter of the carbon spheres produced.

In one embodiment the solvent may be selected from squalane and squalene.

In one embodiment the mixture may be heated to a temperature between about 540°C and 650°C, preferably between about 550°C and about 625°C, more preferably between about 550°C and about 575°C, and ideally about 565°C.

In one embodiment the pressure applied to the mixture in step (c) may be between about 1500 to about 7500 psi.

In one embodiment the mixture may be heated under pressure for between about 40 minutes to about 130 minutes, preferably between about 40 minutes to about 120 minutes, more preferably between about 40 minutes to about 60 minutes, and ideally about 45 minutes. In a further embodiment the mixture may be heated under pressure for about 120 minutes.

In one embodiment the process may further comprise step (d) wherein the heated mixture may be allowed to cool to room temperature prior to venting of carbon dioxide.

In one embodiment the process may further comprise a step (e) wherein the carbon spheres may be extracted from the cooled mixture by addition of an organic solvent.

In one embodiment the cooled mixture in the organic solvent may be centrifuged to extract the carbon spheres.

In one embodiment the step (a) may optionally further comprise the addition of an organo-metallic precursor.

In one embodiment the organo-metallic precursor is selected from the group comprising Diphenylgermane, Tetraethylgermane, Triphenylgermane, and Tetramethylgermane.

In one embodiment the step (a) may optionally further comprise the addition ofat least one of iron nitrate, gold chloride and copper oxide.

In a further embodiment there is provided carbon spheres produced by the process as explained above.

In another embodiment there is provided a device utilising carbon spheres and/or carbon-metal nanocomposites, produced according to the process described above.

In one embodiment the device may be selected from the group comprising drug-delivery devices, lithium-ion batteries, superhydrophobic coatings and photonic devices.

The technical problem that has been solved is the development of a direct non-templating process of producing monodispersed yields of colloidal carbon spheres with precise sub-micron size control. In addition, the simplistic design of the apparatus allows the surface of the carbon spheres to be further modified with nanocrystals of varying densities. Uniquely, the modification of the spheres also induces the positive side-effect of a carbon phase change from amorphous to graphite.

### Brief Description of the Drawings

The invention will be more clearly understood from the following description of an embodiment thereof, given by way of example only, with reference to the accompanying drawings, in which:-
Figure 1 shows a schematic which illustrates the process of synthesis and assembly of colloidal carbon spheres and germanium (Ge) nanocrystals modification by a method of the present invention.
Figure 2(a)-(c) are Scanning and Transmission Electron Microscope (SEM/TEM) images of sub-micron colloidal carbon spheres produced by the method of the present invention.
Figure 3 illustrates the flexibility of the method of the present invention whereby the inverse relationship between carbon sphere size and the pressure of a supercritical fluid used in the method is illustrated by a graph of Carbon Sphere Diameter (mm) vs. Pressure (PSI).
Figure 4 illustrates a 3-zone furnace used in the heating of the reaction vessel, which precisely controls the temperature of each reaction affording control and exact repeatability with each new synthesis of carbon spheres.
Figure 5 shows scanning (a) and transmission (b) to (e) electron micrographs illustrating the extent of Ge nanocrystal growth from carbon spheres and the different nanocrystals shapes produced by the method of the present invention.
Figure 6 illustrates the extent of Ge modification of colloidal carbon spheres produced by the method of the present invention.
Figure 7 illustrates an XRD graph of Intensity (a.u.) vs. 2 Theta (°) which demonstrates the nucleation of nanocrystallites from the surface of the carbon spheres and the subsequent graphite phase change produced by the method of the present invention.
Figures 8 (a), (b), and (c) illustrate the varying degrees of nanocrystal density achievable with increasing concentrations of organo-metallic precursor used by the method of the present invention.
Figure 9 illustrates the increased hydrophobic ability of carbon spheres subsequent to Ge nanocrystal modification produced by the method of the present invention.

### Detailed Description of the Drawings

This invention utilizes the unique and tuneable properties of supercritical fluids for the template-free synthesis of colloidal carbon spheres via a reverse micelle process. Supercritical fluids have shown a wide range of applications in nanomaterial synthesis and include nanowire, nanoparticle and nanocage production.

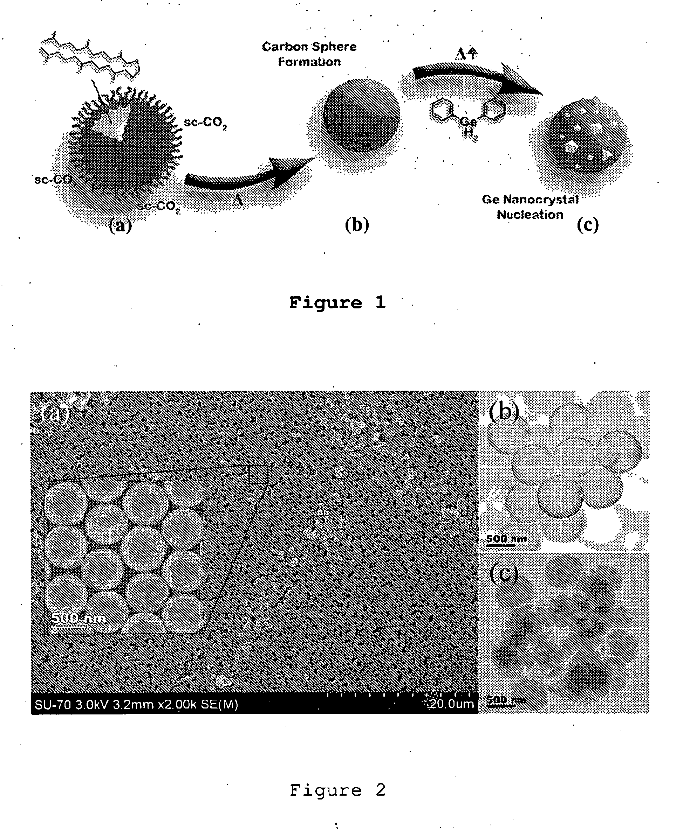

Figure 1 illustrates diagrammatically a facile route to monodispersed carbon spheres which can be reproducibly achieved using a thermolysising fluid medium of supercritical carbon dioxide (SC-CO₂) saturated with a low-volatile solvent, squalane. By rapidly increasing the system temperature (rapidly heating), spontaneously formed squalane micelles are carbonized in the SC-CO₂ (Figure 1A). Controllably varying the pressure of the supercritical fluid can be used to tailor the resulting monodispersed carbon sphere diameter to between 300-1500 nm, before self-assembly into hexagonal closely-packed arrays (Figure 1B). The introduction of an organo-metallic precursor into the system is used to induce the nucleation of 10-30 nm sized Germanium (Ge) nanocrystals across the surface of the spheres (Figure 1C).

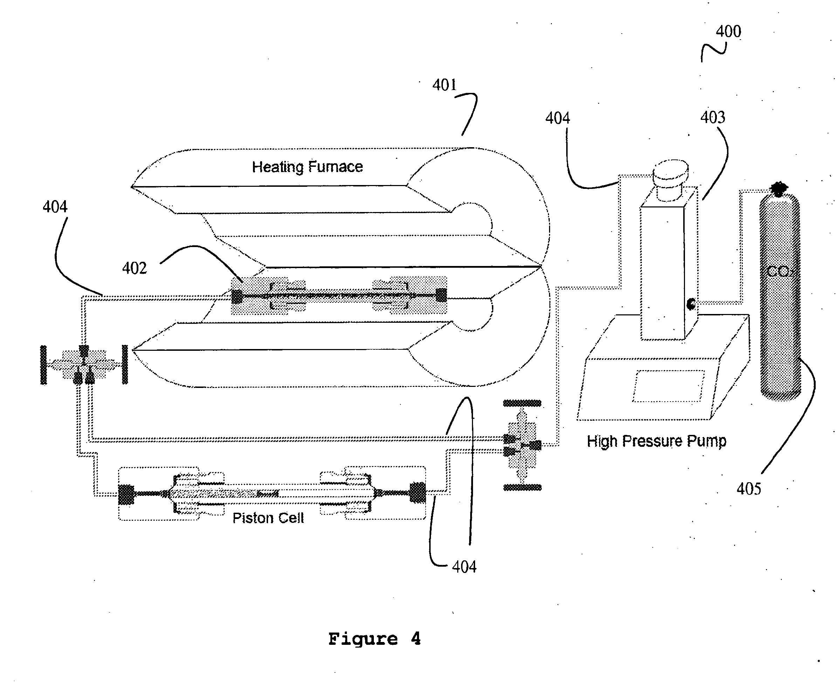

Experiments were conducted using liquid carbon dioxide from BOC (99.85%) and the reaction cells, stainless steel tubing and connections were all supplied from High Pressure Equipment Co. The low-volatile solvent, squalane (99%) was received from Sigma-Aldrich. Diphenylgermane (DPG) (97%) was supplied by Gelest and stored in a nitrogen-filled glove box from where it was dispensed. A Teledyne model 260D computer controlled syringe pump was used to pressurize the system and experiments were all conducted using an Applied Test Systems Inc. model 3210 3-zone heating furnace, which was employed to regulate the temperature to an accuracy of +/- 5°C. The 3-zone furnace used in the heating of the reaction vessel precisely controls the temperature of each reaction affording control and exact repeatability with each new synthesis (Figure 4).

Colloidal carbon spheres were synthesized by carbonization of squalane micelles, at a temperature of 550°C and pressures of 1500-7500 pounds per square inch (psi) (10.342-51.711 MPa) of sc-CO₂. Reactions were generally carried out in 120 ml high pressure reaction cells of a 316 stainless steel construction. A typical manufacturing apparatus for the process of the present invention is illustrated in Figure 4. The simple batch reactor design of the apparatus allows the entire system to be easily scaled up in size for large, kilogram quantity production.

Figure 2 illustrates that the method of the present invention provides tight size distribution and excellent monodispersity of the carbon spheres. This is essential for close-packed assemblies. In addition, the carbon spheres are of sub-micron sizes as clearly illustrated in Figure 2(a). The uniform amorphous nature of the carbon spheres is further emphasized in the TEM image of Figure 2(b) and 2(c) where several spheres stacked upon each other appear almost transparent under the electron beam.

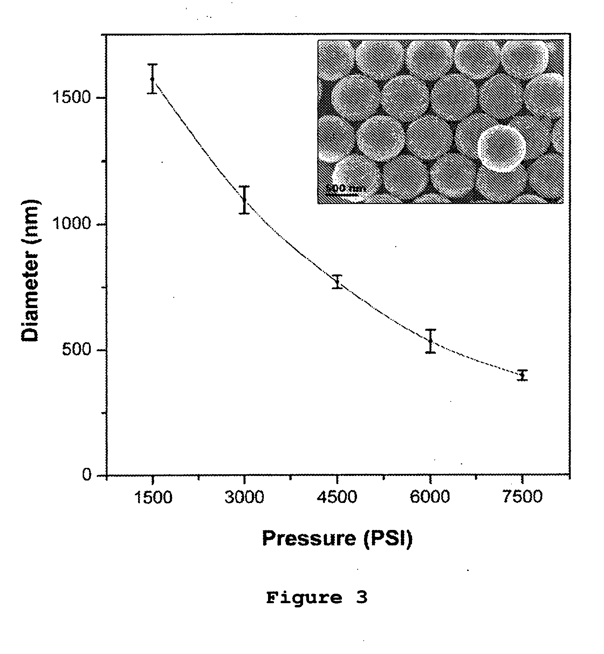

An important aspect of the present invention is the use of a green or environmentally-friendly solvent like supercritical carbon dioxide, the system of synthesis is hazard free and all by-products of the reaction are negated. Using a supercritical fluid offers the flexibility of carbon sphere size control by simply varying the pressure of the fluid. Particle size analysis, illustrated in Figure 3, shows an inverse relationship between the diameter of the carbon spheres produced by the method of the present invention and the pressure of the sc-CO₂ used during synthesis.

Referring now to Figure 4, Figure 4 illustrates a system 400 comprising a 3-zone furnace 401 adapted to be used for heating a reaction vessel 402. In an example synthesis of 750 nm-sized carbon spheres, the reaction vessel (also called a reaction cell) 402 can be loaded with 1 ml of squalane while in a glove box environment. All cells can be sealed under nitrogen before removal and connection to a supercritical pump 403 using ⅛ inch (0.3175cm) stainless steel high-pressure tubing 404. Liquid CO₂ 405 can then be pumped into the reaction cell and the pressure increased above its critical point to 4500 psi (31.026 MPa). The 3-zone heating furnace 401 can be preheated to 565°C, 15°C above the required reaction temperature of 550°C, prior to a reaction cells' insertion. All parameters can be kept constant for the proceeding period of 45 minutes, at which point the furnace 401 can be opened and cooled to room temperature before venting of CO₂.

It will be appreciated that Ge nanocrystal growth from carbon sphere templates can be achieved by dispersing 75 µl of DPG to the existing 1 ml of squalane prior to synthesis. Another acceptable source of hydrocarbon material is squalene. Reactions can then be carried out in a similar fashion as outlined above, however elevated temperatures of 600°C can be used in conjunction with 2 hour reaction times.

A black powder containing the yield of amorphous carbon spheres was observed upon completion of synthesis and was collected from the reaction vessel 402 using 20 ml portions of either toluene or chloroform. Yields comprising Ge-C nanocomposites were observed to be dark purple in colour. All samples can be sonicated and then centrifuged 3-4 times at 4500 rpm for 10 minutes, removing any residual solvent with the discarded supernatant.

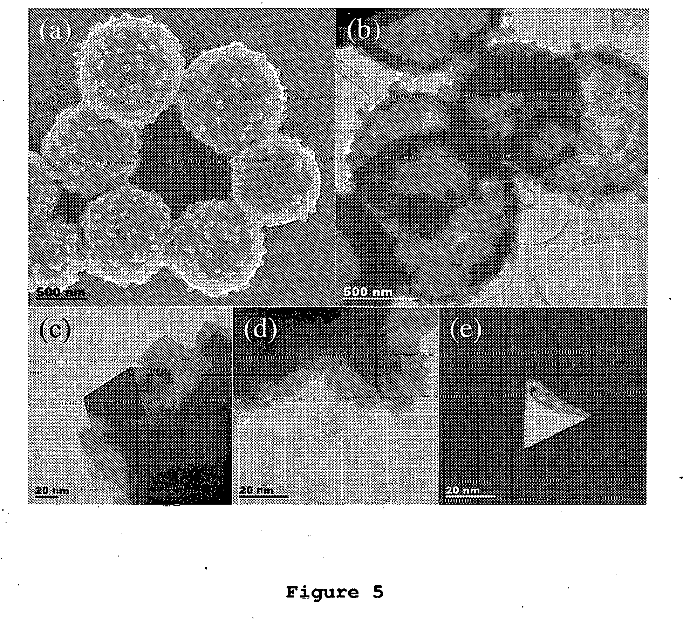

One of the advantages of the method of the present invention is that it affords the user the ability to nucleate nanocrystallites from the surface of the carbon spheres. This advantage is illustrated in Figure 5 where scanning (a) and transmission (b) electron micrographs illustrate the extent of Ge nanocrystal growth from carbon spheres. Different morphologies of Ge nanocrystals are highlighted in the bright field TEM images (c) and (d) and the corresponding dark field micrograph (e). Analysis of individual nanocrystals identified several different cubic and triangular morphologies as well as a smaller percentage of rod-shaped structures.

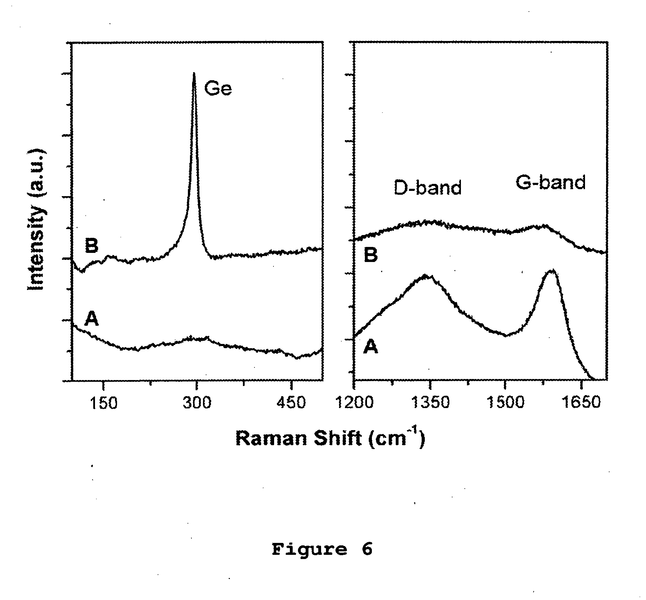

The Raman spectra outlined in Figure 6 were collected from samples of carbon spheres before and after surface modification with Ge nanocrystals. As is evident in pattern (A), all unmodified carbon spheres produced at different pressure conditions exhibited two characteristic Raman peaks at approximately 1351 and 1590 cm⁻¹, corresponding to the D and G bands of polycrystalline graphite, respectively. The D-band is generally attributed to defects and lattice distortions in carbon structures, while the G-band is characteristic of graphitic material, with crystalline graphite typically exhibiting a single peak centred around 1580 cm-¹. Pattern (B) shows a single predominant peak for Ge at 296.37 cm⁻¹ and lower intensity peaks for carbon at 1343 and 1575 cm⁻¹ respectively.

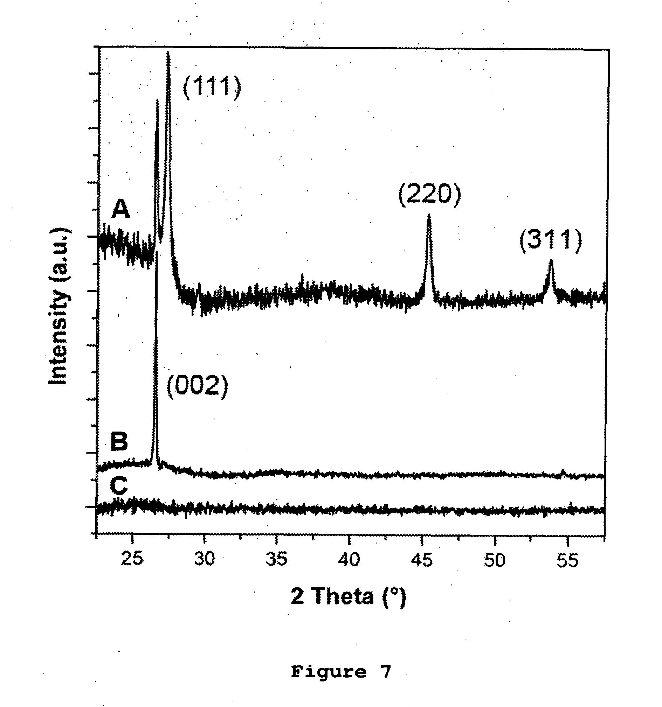

Figure 7 illustrates that nanocrystal modification induces a phase change of the carbon nanospheres from amorphous to graphitic carbon. This graphitic enhancement offers the advantage of increased electrical conductivity and porosity. This advantage is illustrated in Figure 7 where XRD patterns collected from colloidal samples functionalisation with Ge at 650°C (A) and 550°C (B) and of amorphous carbon spheres (C) can be seen.

Due to the high temperature of carbon sphere fabrication, a wide range of materials can be incorporated so that various different metal-carbon composites can be produced. This can be achieved using such precursors as: iron nitrate, gold chloride and copper oxide.

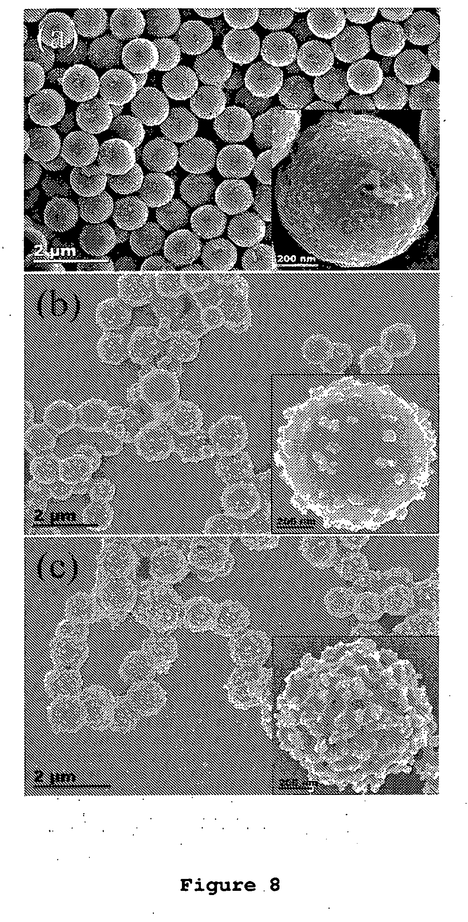

A particular advantage offered by the present invention is that the degree of nanocrystal density can be easily tailored by varying the concentration of organometallic precursor. Figure 8 clearly illustrates this with SEM images showing the extent of Ge nanocrystal growth using 0 µl (a), 250 µl (b) and 500 µl (c) of tetraethylgermane precursor.

One advantage of the present invention is that it removes the dependency upon the incorporation of templating structures in the synthesis of colloidal carbon spheres. This reduces production costs and processing steps.

A surprising and significant finding of the present invention is that the method achieves an 80% conversion rate of precursor, allowing high yields of 100-200 mg of product to be readily and easily reproduced with each synthesis.

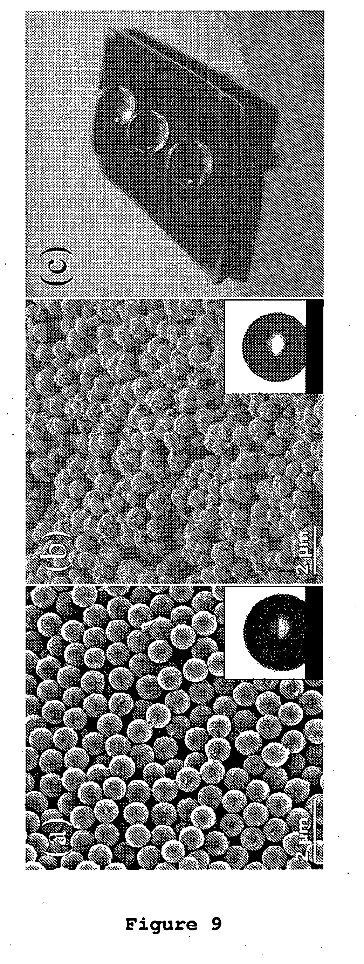

Due to their high surface roughness, assemblies of Ge-C nanocomposites arrays on silicon wafers were found to be superhydrophobic, with contact angles of 165-170° being observed. Figure 9(a) shows an SEM image from a typical array of densely packed amorphous carbon spheres which resulted in hydrophobic contact angles of 120-125° while the addition of nanocrystals across the exterior of the carbon spheres (Figure 9(b)) resulted in a large increase in surface roughness, enhancing contact angles to a superhydrophobic range of 165-170°. The effect of this superhydrophobic coating is shown in Figure 9(c), where surface tension in the liquid forms near perfect spherical droplets of water which exhibited roll-off angles of just 2-3°.

Both colloidal carbon spheres and Ge-C nanocomposites have a wide range of applications, some of which include:
1. New drug delivery systems are being explored with inert porous materials. Sub-micron sized carbon spheres would offer an ideal inert structure. It is envisaged the nano-porosity of the spheres produced according to the invention will be used for drug loading and controlled release.
2. Close-packed assemblies of monodispersed carbon spheres are being explored for their use in black carbon sphere colloidal crystal fabrication. These super-crystals are of particular interest given their unique photonic properties.
3. Ge-C nanocomposites are being actively sought for their use as advance anode components of Lithium-ion batteries. The combination of both materials offers high capacity loading with excellent electrical connectivity to the current collector.
4. The wettability of a solid substrate is an important factor for self-cleaning and anti-adhesion materials and is generally dominated by the chemical composition and the surface roughness of a given substance. In this regard, the hierarchical structural design of Ge nanocrystals on micron-sized carbon spheres would be an ideal benefit given its lotus type effect upon water droplets arising from its higher surface roughness properties.

In the specification, the term "monodispersed carbon spheres" should be taken to mean a collection of carbon spheres having the same size and shape.

The rapid increase in temperature to the squalane saturated solution of SC-CO₂ induces carbonization of the suspended hydrocarbon components. In the specification, the term "rapidly heated" should be taken to mean an increase in system temperature of 25°C to a carbonizing range of 540-650°C in less than 2 minutes.

## Claims

1. A process for producing monodispersed carbon spheres comprising the steps of:
(a) mixing supercritical-carbon dioxide fluid with a low volatile solvent in an inert atmosphere;
(b) heating the mixture in (a) to a temperature to carbonize the solvent; and
(c) controllably varying pressure to the heated mixture in (b) to produce carbon spheres.

2. A process according to Claim 1 wherein the pressure applied to the heated mixture is inversely proportional to the diameter of the carbon spheres produced.

3. A process according to Claim 1 or Claim 2 wherein the low volatile solvent is selected from the squalane and squalene.

4. A process according to any one of Claims 1 to 3, wherein the mixture is heated to a temperature between about 540°C and 650°C.

5. A process according to any of Claims 1 to 3, wherein the mixture is heated to a temperature of about 565°C.

6. A process according to any preceding claim, wherein the pressure applied to the mixture in step (c) is between about 10.34 to about 51.71 MPa.

7. A process according to any preceding claim wherein the mixture is heated under pressure for between about 40 minutes to about 130 minutes.

8. A process according to Claim 6 wherein the mixture is heated under pressure for about 45 minutes.

9. A process according to any of the preceding claims further comprising a step (d) wherein the heated mixture is allowed to cool to room temperature prior to venting of carbon dioxide.

10. A process according to any preceding claim further comprising a step (e) wherein the carbon spheres are extracted from the cooled mixture by addition of an organic solvent.

11. A process according to Claim 9, wherein the cooled mixture in the organic solvent is centrifuged to extract the carbon spheres.

12. A process according to any of the preceding claims, wherein step (a) optionally further comprises addition of an organo-metallic precursor.

13. A process according to Claim 12, wherein the organo-metallic precursor is selected from the group comprising Diphenylgermane, Tetraethylgermane, Tripherlylgermane, and Tetramethylgermane.

14. A process according to any of claims 1 to 11, wherein step (a) optionally further comprises the addition of at least one of iron nitrate, gold chloride and copper oxide.

## Patentansprüche

1. Verfahren zur Herstellung von monodispersen Kohlenstoffkugeln, das die folgenden Schritte umfasst:
(a) Mischen von überkritischem Kohlendioxidfluid mit einem schwerflüchtigen Lösungsmittel in einer inerten Atmosphäre;
(b) Erhitzen der Mischung von (a) auf eine Temperatur, um das Lösungsmittel zu carbonisieren; und
(c) steuerbares Variieren des Drucks auf die erhitzte Mischung von (b), um Kohlenstoffkugeln herzustellen.

2. Verfahren nach Anspruch 1, worin der auf die erhitzte Mischung ausgeübte Druck umgekehrt proportional zum Durchmesser der hergestellten Kohlenstoffkugeln ist.

3. Verfahren nach Anspruch 1 oder Anspruch 2, worin das schwerflüchtige Lösungsmittel aus dem Squalan und Squalen ausgewählt ist.

4. Verfahren nach einem der Ansprüche 1 bis 3, worin die Mischung auf eine Temperatur zwischen etwa 540°C und 650°C erhitzt wird.

5. Verfahren nach einem der Ansprüche 1 bis 3, worin die Mischung auf eine Temperatur von etwa 565°C erhitzt wird.

6. Verfahren nach einem vorstehenden Anspruch, worin der auf die Mischung ausgeübte Druck im Schritt (c) zwischen etwa 10,34 bis etwa 51,71 MPa beträgt.

7. Verfahren nach einem vorstehenden Anspruch, worin die Mischung unter Druck zwischen etwa 40 Minuten bis etwa 130 Minuten erhitzt wird.

8. Verfahren nach Anspruch 6, worin die Mischung unter Druck für etwa 45 Minuten erhitzt wird.

9. Verfahren nach einem der vorstehenden Ansprüche, das weiter einen Schritt (d) umfasst, worin ermöglicht wird, dass die erhitzte Mischung vor dem Ablassen von Kohlendioxid auf Raumtemperatur abgekühlt wird.

10. Verfahren nach einem vorstehenden Anspruch, das weiter einen Schritt (e) umfasst, worin die Kohlenstoffkugeln aus der abgekühlten Mischung durch Zugabe eines organischen Lösungsmittels extrahiert werden.

11. Verfahren nach Anspruch 9, worin die abgekühlte Mischung in dem organischen Lösungsmittel zentrifugiert wird, um die Kohlenstoffkugeln zu extrahieren.

12. Verfahren nach einem der vorstehenden Ansprüche, worin der Schritt (a) optional weiter die Zugabe eines metallorganischen Vorläufers umfasst.

13. Verfahren nach Anspruch 12, worin der metallorganische Vorläufer aus der Gruppe ausgewählt ist, die Diphenylgerman, Tetraethylgerman, Triphenylgerman und Tetramethylgerman umfasst.

14. Verfahren nach einem der Ansprüche 1 bis 11, worin der Schritt (a) optional weiter die Zugabe von mindestens einem von Eisennitrat, Goldchloiid und Kupferoxid umfasst.

## Revendications

1. Procédé de production de sphères de carbone monodispersées, comprenant les étapes consistant à :
(a) mélanger un fluide à base de dioxyde de carbone supercritique avec un solvant à faible volatilité dans une atmosphère inerte ;
(b) chauffer le mélange de (a) jusqu'à une température pour carboniser le solvant ; et
(c) faire varier de manière contrôlable la pression du mélange chauffé de (b) afin de produire des sphères de carbone.

2. Procédé selon la revendication 1, dans lequel la pression appliquée au mélange chauffé est inversement proportionnelle au diamètre des sphères de carbone produites.

3. Procédé selon la revendication 1 ou la revendication 2, dans lequel le solvant à faible volatilité est choisi parmi le squalane et le squalène.

4. Procédé selon l'une quelconque des revendications 1 à 3, dans lequel le mélange est chauffé jusqu'à une température comprise entre environ 540°C et 650°C.

5. Procédé selon l'une quelconque des revendications 1 à 3, dans lequel le mélange est chauffé jusqu'à une température d'environ 565°C.

6. Procédé selon l'une quelconque des revendications précédentes, dans lequel la pression appliquée au mélange dans l'étape (c) se situe entre environ 10,34 à environ 51,71 MPa.

7. Procédé selon l'une quelconque des revendications précédentes, dans lequel le mélange est chauffé sous pression pendant entre environ 40 minutes à environ 130 minutes.

8. Procédé selon la revendication 6, dans lequel le mélange est chauffé sous pression pendant environ 45 minutes.

9. Procédé selon l'une quelconque des revendications précédentes, comprenant en outre une étape (d) dans laquelle on laisse le mélange chauffé refroidir jusqu'à température ambiante préalablement à la purge du dioxyde de carbone.

10. Procédé selon l'une quelconque des revendications précédentes, comprenant en outre une étape (e) dans laquelle les sphères de carbone sont extraites à partir du mélange refroidi par addition d'un solvant organique.

11. Procédé selon la revendication 9, dans lequel le mélange refroidi dans le solvant organique est centrifugé afin d'extraire les sphères de carbone.

12. Procédé selon l'une quelconque des revendications précédentes, dans lequel l'étape (a) comprend en outre éventuellement l'addition d'un précurseur organométallique.

13. Procédé selon la revendication 12, dans lequel le précurseur organométallique est choisi dans le groupe comprenant le diphénylgermane, le tétraéthylgermane, le triphénylgermane et le tétraméthylgermane.

14. Procédé selon l'une quelconque des revendications 1 à 11, dans lequel l'étape (a) comprend en outre éventuellement l'addition d'au moins un parmi le nitrate de fer, le chlorure d'or et l'oxyde de cuivre.
